# EUROPEAN PATENT SPECIFICATION

(11) **EP 1 271 291 B1**
(45) Date of publication and mention of the grant of the patent: **28.02.2007**
(21) Application number: 02014186.7
(22) Date of filing: 25.06.2002
(51) Int. Cl.: G06F 1/32

(54) **Information processing apparatus and power management method**
Informationverarbeitungsvorrichtung und Leistungssteuerungsverfahren
Appareil de traitement d'information et procédé de gestion de la puissance

(30) Priority: 29.06.2001 JP 2001199974
(43) Date of publication of application: 02.01.2003
(73) Proprietor: KABUSHIKI KAISHA TOSHIBA, Tokyo (JP)
(72) Inventor: Terunuma, Yoshikazu, Tokyo 105-8001 (JP)
(74) Representative: Henkel, Feiler & Hänzel

(56) References cited:
- EP-A- 0 432 267
- EP-A- 1 046 979
- US-A- 5 517 649
- US-B1- 6 205 555

## Description

The present invention relates to an information processing apparatus such as personal computers and a power management method of the information processing apparatus, particularly to an information processing apparatus having a plurality of devices and a power management method for managing a power of the plurality of devices.

In recent years, in portable information processing apparatuses such as a notebook-type personal computer, various power management functions are provided for the purpose of lengthening an operating time by a battery. When the power management function is executed, power consumption of various devices such as a CPU, video adapter, hard disk drive, and modem can be reduced.

A user can set desired power management functions to be executed by a system. Thereby, the user can select a power management control in which an operation capability has priority, or a power management control in which the power saving has priority.

However, a conventional system in which the user sets power management function beforehand in this manner has the following two problems.
1) The user has to determine an operating status of an information processing apparatus, and has to perform a setting operation of the power management in accordance with the environment, so that the setting operation becomes complicated.
2) A set value determined by the user is only based on a user's sense, and it is impossible to determine whether the setting is optimum.

US 5 517 649 discloses a method of managing the power consumed by a hard disk drive in a portable computer. The first step consists of measuring the work load placed on the hard disk drive by a particular computer, a particular application and a particular user. The next step is to determine the average power consumed in the disk drive in the active state and in a lower power state for a series of wait times. The next step is to determine the total average power consumed by the disk drive for both states for the series of wait times. The next step is to determine the wait time at which the total average power consumed by the disk drive in minimum. The final step is to set the wait time at which the disk drive operates to the previously determined minimum wait time.

The present invention is directed to method and apparatus that substantially obviates one or more of the problems due to limitations and disadvantages of the related art.

According to the present invention the above object is achieved by an information processing apparatus according to claim 1 and by a power control method for an information processing apparatus as specified in claim 7. The dependent claims are directed to different advantageous aspects of the invention.

Thus, an optimum power management control can automatically be executed in accordance with an operating status of the information processing apparatus.

The invention can be more fully understood from the following detailed description when taken in conjunction with the accompanying drawings, in which:
FIG. 1 is a block diagram showing a constitution of an information processing apparatus according to the first embodiment of the present invention;
FIG. 2 is a functional block diagram of a power management/control system for use in the first embodiment;
FIG. 3 is a diagram showing one example of a database included in the power management/control system of the first embodiment;
FIGS. 4A, 4B, and 4C are diagrams showing power consumption characteristics of devices in the first embodiment;
FIG. 5 is a flowchart showing a procedure of a power management control processing of the first embodiment;
FIG. 6 is a block diagram showing a constitution of an information processing apparatus according to the second embodiment of the present invention; and
FIG. 7 is a flowchart showing a procedure of a power management control processing of the second embodiment.

An embodiment of an information processing apparatus according to the present invention will now be described with reference to the accompanying drawings.

### First Embodiment

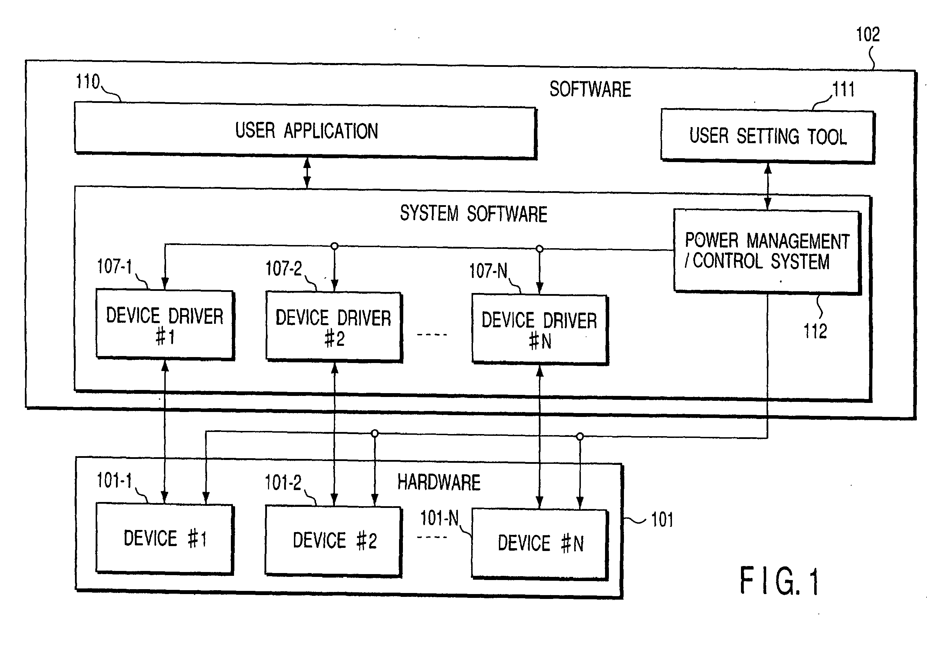

FIG. 1 shows a constitution of the information processing apparatus according to the first embodiment of the present invention. In this embodiment, the information processing apparatus is a portable computer such as a notebook-type personal computer, and can be operated by a battery. The information processing apparatus is roughly divided into a hardware unit 101 and a software unit 102.

The hardware unit 101 comprises a plurality of devices (#1, #2 to #N) 101-1, 101-2, ... 101-N. Examples of the devices 101-1, 101-2, ... 101-N include a CPU, memory, chip set, video adapter, hard disk drive, display monitor, USB controller, IEEE 1394 I/F controller, modem, LAN controller, and radio communication module.

The software unit 102 comprises a system software 103, user application 110, user setting tool 111, and the like. The system software 103 is a program group for controlling the hardware unit 101, such as an operating system and utility program. A plurality of device drivers (#1, #2 to #N) 107-1, 107-2, ... 107-N, a power management/control system 112, and the like are provided. The device drivers (#1, #2 to #N) 107-1, 107-2, ... 107-N manage and control the plurality of corresponding devices (#1, #2 to #N) 104-1, 104-2, ... 104-N. In this case, one device driver may manage plural devices.

The power management/control system 112 is a program for performing the power management control of the information processing apparatus, and controls operating speeds of the respective devices 104-1, 104-2, ... 104-N or an on/off of a power supply in accordance with a set value for a power saving control designated by a user. Examples of the set value include 1) the operating speed of the CPU (clock frequency of the CPU), 2) time required from when an idle state is detected until the power supply of the corresponding device is turned off, and 3) designation of a use device and a nonuse device.

Moreover, the power management/control system 112 also has a function (optimization mode) of optimizing the set value for the power saving control. In the optimization mode, even when the user does not perform an operation of designating the set value for the power saving control, the power management/control system 112 automatically selects the optimum value. To realize the function, the power management/control system 112 detects the present operating status of the hardware unit 101 at a constant time interval. In a detection method, information is obtained from the device drivers 107-1, 107-2, ... 107-N corresponding to the respective devices 104-1, 104-2, ... 104-N, or the information is obtained directly from the devices 104-1, 104-2, ... 104-N if necessary. Thereby, it is possible to grasp a tendency of operating status of each of the devices.

The power management/control system 112 predicts the set value for an optimum power saving control based on the tendency of the past operating status of the information processing apparatus every predetermined time period (e.g., every five minutes), and controls the set value for the power saving control based on the predicted result. That is, the system predicts the future operating status of the devices 104-1, 104-2, ... 104-N, determines the set value for the power saving control, and controls the operating speeds of the respective devices 104-1, 104-2, ... 104-N or the on/off of the power supply based on the determined set value. Even in this case, similarly as during the obtaining of the information, the system sets the value via the device drivers 107-1, 107-2, ... 107-N corresponding to the respective devices 104-1, 104-2, ... 104-N, or directly controls the devices 104-1, 104-2, ... 104-N if necessary.

The user-setting tool 111 is an interface for allowing the user to designate the set value for the power saving control. Moreover, by using the user-setting tool 111, one of the optimization mode for automatically performing the power saving control, and a user-setting mode for performing the power saving control in accordance with the user setting can be selected. Even when the optimization mode is selected, the user can use the user-setting tool 111 to freely set the individual set values again.

### Power Management/control System 112

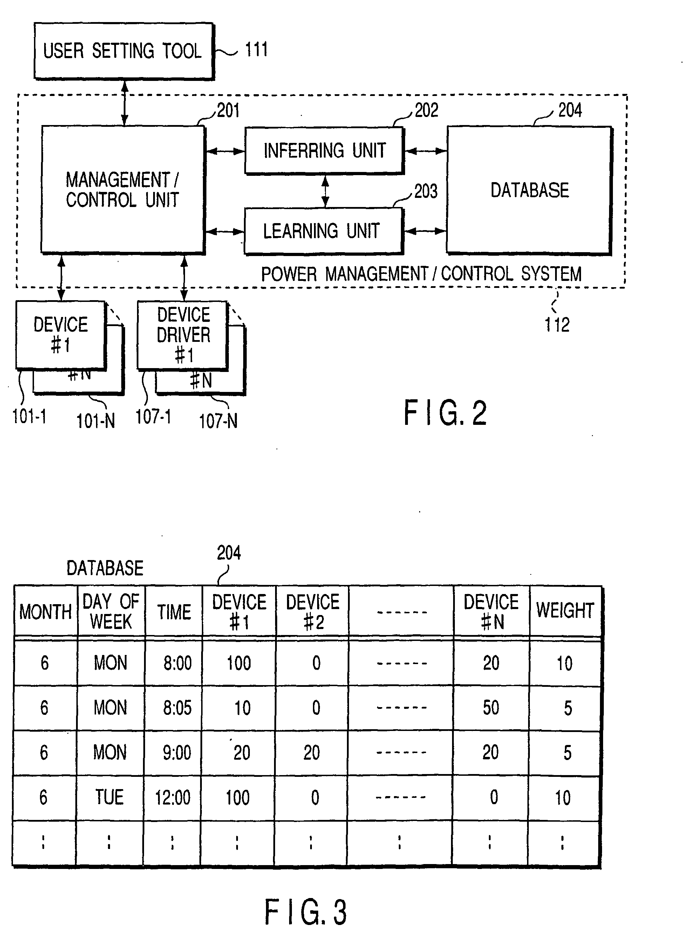

FIG. 2 shows a functional constitution of the power management/control system 112. The power management/control system 112 includes a management/control unit 201, inferring unit 202, learning unit 203, and database 204.

The management/control unit 201 performs a power management control, has an interface with the respective devices 104-1, 104-2, ... 104-N and device drivers 107-1, 107-2, ... 107-N, and also has an interface with the user via the user setting tool 111. This management/control unit 201 executes the obtaining of operating status of the respective devices 104-1, 104-2, ... 104-N and the power management control of the respective devices 104-1, 104-2, ... 104-N.

The inferring unit 202 predicts the set value for the optimum power saving control based on characteristic information that indicates the past operating status of the information processing apparatus for every predetermined time period and is stored in the database 204. The unit 202 predicts the future operating status of the respective devices 104-1, 104-2, ... 104-N for a next time period based on the present operating status of the respective devices 104-1, 104-2, ... 104-N, and the past operating status of the respective devices 104-1, 104-2, ... 104-N which is indicated by the characteristic information. The predicted result is notified to the management/control unit 201, and the power management control is executed based on the predicted result by the management/control unit 201.

The learning unit 203 learns the operating status of the information processing apparatus, and generates the above-described characteristic information. That is, the learning unit 203 analyzes the history of the past operating status of the information processing apparatus, which is obtained by the management/control unit 201 and stored in the database 204. Moreover, the leaning unit 203 generates the characteristic information indicating the tendency of the operating status of each of the device drivers 107-1, 107-2, ... 107-N for every predetermined time period and stores the characteristic information into the database 204.

### Characteristic Information

FIG. 3 shows one example of the characteristic information stored in the database 204. The characteristic information has time scales "month", "day of the week", and "time", and the operating status of the respective device drivers 107-1, 107-2, ... 107-N, and weight values are registered for every predetermined time period (e.g., every five minutes) designated by the time scales.

For example, in an example of FIG. 3, it is shown that a time period from time 8:00 to 8:05 on Monday (MON) in June, the device #1 is fully used (100%), the device #2 is not used at all (0%), and the device #N is partly used (20%). It is shown that a time period from time 9:00 to 9:05 on Monday (MON) in June, all the devices #1 to #N are partly used (20%). The operating statuses of the respective devices are represented by numeric values of 0 to 100% so that the tendency of the operating status (use amount of resource) of the CPU or memory can also be recorded. Depending on the device, there are sometimes only two states ON and OFF.

A weight value indicates a frequency of occurrence of the corresponding status. That is, it can be assumed that with a larger weight value, a probability of occurrence of the corresponding operating status increases at the point of time.

### Operating Status of Devices

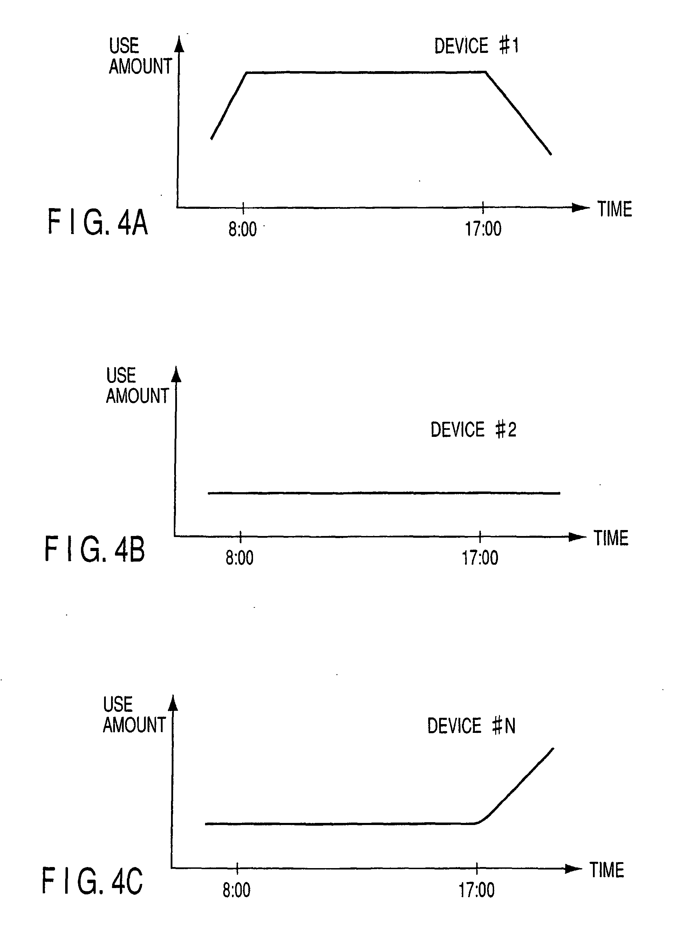

FIGS. 4A to 4C show one example of a change of the operating status of each of the devices 104-1, 104-2, ... 104-N. When the same user uses the information processing apparatus, the operating status of each device depends on a user's action pattern.

For example, assuming that the user goes to work at 8:00 and leaves work at 17:00, as shown in FIG. 4A, the operating status of the devices such as the CPU, memory, and LAN of the information processing apparatus has a large value between 8:00 and 17:00, but the value of the operating status extremely drops before 8:00 and after 17:00. On the other hand, as shown in FIG. 4B, some devices such as the IEEE 1394 I/F, and modem are hardly used between 8:00 and 17:00. Furthermore, when the user comes home, the user uses the devices such as the IEEE 1394 I/F and modem in many cases. Therefore, as shown in FIG. 4C, the value of the operating status sometimes rises after 17:00.

Moreover, working days of Monday through Friday have the above-described tendency, but Saturday and Sunday sometimes have the operating status very different from those of Monday through Friday.

Therefore, as described with reference to FIG. 3, the above-described characteristic information is generated and recorded which indicates the tendency of the operating status of each device with the time scales of the "month", "day of the week", and "time". Thereby, it is possible to highly precisely predict the operating status of each device by the day of the week and time period from the characteristic information.

### Power Management Control Processing

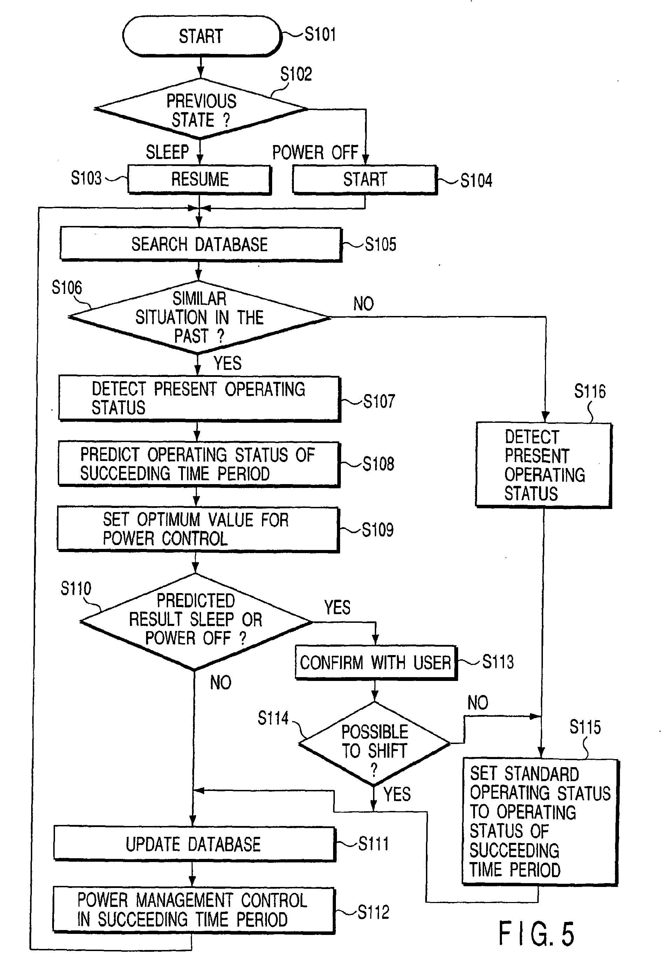

A procedure of a power management control processing executed by the power management/control system 112 during the optimization mode will next be described with reference to a flowchart of FIG. 5.

The power management/control system 112 is started, when the user turns on the power supply of the information processing apparatus (step S101). A flow of the processing to be executed differs with the previous system status. Therefore, the power management/control system 112 first determines whether the previous system status is a sleep state or a power off (shutdown) state (step S102). Here, the sleep state means that a system context necessary for restoring a system-operating environment is saved in a main memory or a hard disk, and subsequently the power supply of the system is turned off.

In the sleep state, the power management/control system 112 executes a resume processing of restoring the system context and restoring the system-operating environment just before the power off (step S103). In the power off (shutdown) state, a usual boot up processing for starting the operating system is executed (step S104).

The information processing apparatus is brought into an operative state in this manner. While the information processing apparatus is in the operative state, the power management/control system 112 repeatedly executes the following processing.

The power management/control system 112 first searches the database 204 to find characteristic information corresponding to the present time period and a succeeding time period (steps S105, S106). If it is 8:02, Monday of June, characteristic information corresponding to the present time period from 8:00 to 8:05 and the succeeding time period from 8:05 to 8:10 is found. If it is 9:04, Monday of June, characteristic information corresponding to the succeeding time period from 9:05 to 9:10 is not found.

When the characteristic information is found (YES in step S106), the power management/control system 112 detects the present operating status of the respective devices 104-1, 104-2, ... 104-N (step S107). The system 112 predicts the operating status of the respective devices 104-1, 104-2, ... 104-N for the succeeding time period based on the detected present operating status of the respective devices 104-1, 104-2, ... 104-N and the characteristic information in the database 204 indicating the past operating status corresponding to the present time period and the succeeding time period, and determines the set value for the optimum power saving control for each of the devices 104-1, 104-2, ... 104-N (steps S108, S109).

For example, when the detected operating status of the respective devices 104-1, 104-2, ... 104-N agrees with the past operating status corresponding to the present time period, it can be assumed that the past operating status corresponding to the succeeding time period will be happened with a high probability. For the device whose past operating status is different from the detected actual status, the probability at which the status shifts to the past operating status corresponding to the succeeding time period is assumed to be low. The weight value concerning the past operating status will also be considered.

In this manner, the optimum value for the power saving control is set based on the determination. In this case, in a predicted operating status where the operations of all the devices 104-1, 104-2, ... 104-N are stopped, the information processing apparatus is expected to shift to the sleep state or the power off state.

Subsequently, the power management/control system 112 determines whether the predicted operating status is the sleep state or the power off state (step S110). When the predicted operating status is the sleep state or the power off state (YES in the step S110), the power management/control system 112 inquires of the user as to whether the apparatus may shift to the sleep state or power off state by a screen display, and the like (step S113). If the apparatus directly shifts to the sleep state or power off state, this supposedly sometimes goes against a user's intention. By a response from the user, the system determines whether or not the apparatus can shift to the sleep state or the power off state (step S114). Of course, the power off state may be excluded beforehand from the predicted operating status. When there is no response from the user concerning the inquiry, the apparatus may automatically shift to the sleep state.

If the user does no permit a shift to the sleep state or power off state (NO in step S114), a predetermined standard operating status is set to the operating status for the succeeding time period (step S115).

When the characteristic information is not found (NO in step S106), the power management/control system 112 detects the present operating status of the respective devices 104-1, 104-2, ... 104-N (step S116). Then, a predetermined standard operating status is set to the operating status for the succeeding time period (step S115).

After steps S110, S114, and S115, the power management/control system 112 updates the database 204 by rewriting the characteristic information indicating the operating status corresponding to the present time period and the succeeding time period (step S111). Thereafter, during the succeeding time period, the power management control is executed based on the set value (step S112).

The end of the processing is not shown in the flowchart of FIG. 5. However, if the future operating status is the power off state or the sleep state, the processing is completed by the shift to the power off state or the sleep state.

As described above, according to the first embodiment, the information processing apparatus having a plurality of devices generates the characteristic information indicating the tendencies of the operating status of the plurality of devices by the month, day of the week, and time period based on the history of the operating status concerning each of the devices; obtains the tendency of the operating status of each device corresponding to the present month, day of the week, and time period from the characteristic information; predicts the operating status of each device of the succeeding time period; and controls the on/off of the power supply of each device or the operating speed of the device based on the predicted operating status of the device.

According to the information processing apparatus, when the daily operating status by the user is learned, the optimum power management control suitable for the operating status can be realized. Particularly, when the tendency of the operating status is grasped for the month, day of the week, and time period, and the suitable power management control is performed, the setting of the power management can constantly be optimized. Furthermore, since the on/off of the power supply or the operating speed of the device is controlled individually for the devices, it is possible to eliminate any useless power consumption by the actually unused device.

The characteristic information for at least each time period may be registered, and it is unnecessary to register the characteristic information for each month or each day of the week beforehand.

### Second Embodiment

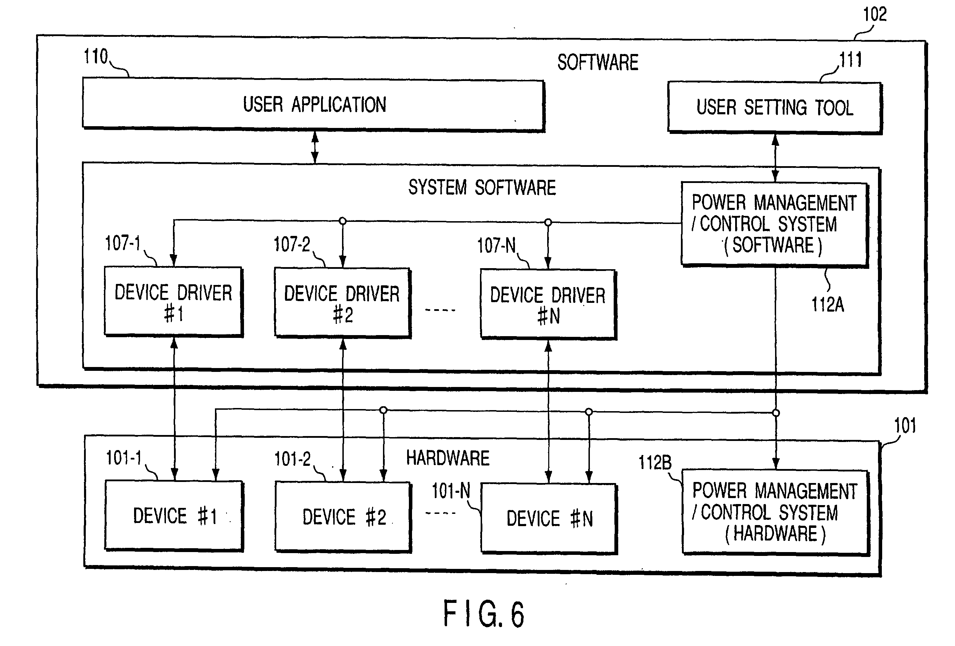

FIG. 6 shows the constitution example of the information processing apparatus according to the second embodiment of the present invention. The information processing apparatus has a constitution different from the constitution of FIG. 1 in that a power management/control system 112B constituted of hardware is provided in addition to a power management/control system 112A constituted of software, and the other respects are similar to those of FIG. 1. The power management/control system 112A constituted of software corresponds to the power management/control system 112 of FIG. 1. The power management/control system 112B constituted of hardware has an interface with the power management/control system 112A, is managed/controlled by the power management/control system 112A, and manages/controls the respective devices 104-1, 104-2, ... 104-N.

The power management/control system 112B comprises a controller for generating a wakeup signal to change the information processing apparatus to a power on state from the sleep state or the power off state at a set alarm time. The power management/control system 112A sets the alarm time to generate the wakeup signal in the power management/control system 112B. That is, the power management/control system 112A predicts a time to turn on the power supply of the information processing apparatus based on the above-described characteristic information, and sets the predicted time as the alarm time in the power management/control system 112B. Even when the power supply of the information processing apparatus is turned off, the power continues to be supplied to the power management/control system 112B from the battery, and the like, and the wakeup signal is automatically generated at the alarm time. This brings the information processing apparatus in the power on state.

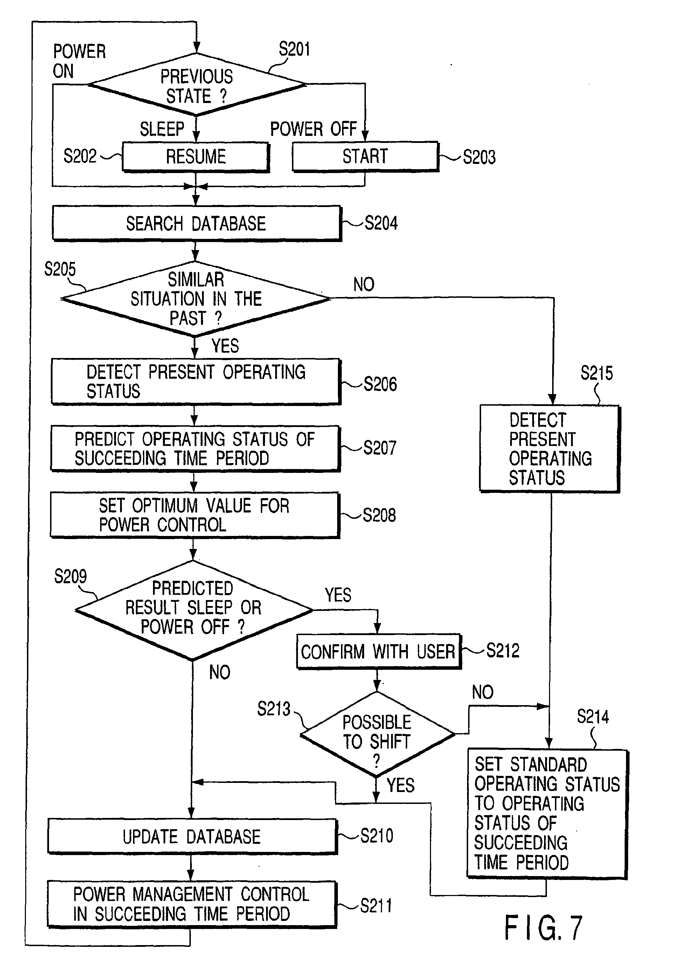

FIG. 7 is a flowchart showing the flow of the processing operation by the power management/control systems 112A and 112B.

The flowchart of FIG. 7 shows the flow as seen from the user, and therefore the power off status is included. In the constitution of FIG. 6, the status of the power off, which is visible from the user, is also one of the managed statuses. Therefore, the flow of the processing operation does not have a starting point or an endpoint in the flowchart of FIG. 7. The other processing operations are equal to those of FIG. 5.

Even in this embodiment, since the flow of the processing to be executed differs with the previous system status, it is first determined whether the previous system status was the sleep state, or the power off (shutdown) state, or was maintained in the power on state (step S201). The resume processing is executed, when the status was the sleep state (step S202). The boot up processing is executed, when the status was the power off (shutdown) state (step S203).

The database 204 is searched to find characteristic information corresponding to the present time period and a succeeding time period (steps S204, S205).

When the characteristic information is found (YES in step S205), the present operating status of the respective devices 104-1, 104-2, ... 104-N is detected (step S206). The operating status of the respective devices 104-1, 104-2, ... 104-N for the succeeding time period is predicted based on the detected present operating status of the respective devices 104-1, 104-2, ... 104-N and the characteristic information in the database 204 indicating the past operating status corresponding to the present time period and the succeeding time period, and the set value for the optimum power saving control for each of the devices 104-1, 104-2, ... 104-N is determined (steps S207, S208).

In this manner, the optimum value for the power saving control is set based on the determination. In this case, in a predicted operating status where the operations of all the devices 104-1, 104-2, ... 104-N are stopped, the information processing apparatus is expected to shift to the sleep state or the power off state.

Subsequently, it is determined whether the predicted operating status is the sleep state or the power off state (step S209). When the predicted operating status is the sleep state or the power off state (YES in the step S209), the user is inquired as to whether the apparatus may shift to the sleep state or power off state by a screen display, and the like (step S212). By a response from the user, it is determined whether or not the apparatus can shift to the sleep state or the power off state (step S213). Of course, the power off state may be excluded beforehand from the predicted operating status. When there is no response from the user concerning the inquiry, the apparatus may automatically shift to the sleep state.

If the user does no permit a shift to the sleep state or power off state (NO in step S213), a predetermined standard operating status is set to the operating status for the succeeding time period (step S214).

When the characteristic information is not found (NO in step S205), the present operating status of the respective devices 104-1, 104-2, ... 104-N is detected (step S215). Then, a predetermined standard operating status is set to the operating status for the succeeding time period (step S214).

After steps S209, S213, and S214, the database 204 is updated by rewriting the characteristic information indicating the operating status corresponding to the present time period and the succeeding time period (step S210). Thereafter, during the succeeding time period, the power management control is executed based on the set value (step S211).

As described above, even according to the second embodiment, when the daily operating status by the user is learned, the optimum power management control suitable for the operating status can be realized. Particularly, when the tendency of the past operating status is grasped by the day of the week, and the time period, and the suitable power management control is performed, the setting of the power management can constantly be optimized. Furthermore, since the on/off of the power supply or the operating speed of the device is controlled individually for the devices 104-1, 104-2, ... 104-N, it is possible to eliminate any useless power consumption by the actually unused device.

The characteristic information may be registered for at least each time period, and it is unnecessary to register the characteristic information beforehand for each month, or each day of the week.

As described above, according to the present invention, it is possible to realize the optimum power management control suitable for the operating status of the information processing apparatus by the user.

The presently disclosed embodiments are therefore to be considered in all respects as illustrative and not restrictive, the scope of the invention being indicated by the appended claims, rather than the foregoing description, and all changes that come within the meaning and range of equivalency of the claims are therefore intended to be embraced therein. For example, all the power management controls of the embodiments can be realized by software except for the generation of the wakeup signal. Therefore, when the computer program for allowing the computer to execute the procedure of the power management control is stored in a computer readable storage medium, and when this program is simply introduced and executed in the usual computer through the storage medium, an effect can easily be obtained similarly as the embodiments.

## Claims

1. An information processing apparatus having a device, comprising:
storage means (204) for storing characteristic information indicating a past operating status of the device; and
means (201) for controlling a power management of the device based on the characteristic information;
wherein said controller means (201) comprises:
means (112) for detecting a present operating status of the device and predicting a future operating status of the device based on the detected present operating status and the characteristic information;
power controller means (112) for controlling the power management of the device based on the predicted future operating status of the device; wherein
the power controller means (112) controls on/off of a power supply of the device.

2. The apparatus according to claim 1, further comprising:
means (201) for periodically detecting an operating status of the device; and
means (202, 203) for analyzing the detected operating status of the device and obtaining the characteristic information.

3. The apparatus according to claim 1, wherein the power controller mean (112) controls an operating speed of the device.

4. The apparatus according to claim 1, further comprising:
means (112B) for generating a wakeup signal for changing the information processing apparatus to a power-on state from a sleep state at a predetermined time,
and wherein the controlling means (201) comprises:
means (202, 203, 204) for predicting, based on the characteristic information, a time at which a power of the information processing apparatus is turned on; and
means (202, 203, 204) for determining the predetermined time based on the predicted time.

5. The apparatus according to claim 1, wherein the controlling means (201) comprises:
means (202, 203, 204) for predicting, based on the characteristic information, a time at which the information processing apparatus is changed to a sleep state from an operative state; and
means (202, 203, 204) for changing the information processing apparatus to the sleep state from the operative state at the predicted time.

6. The apparatus according to claim 1, wherein:
the means (204) for storing characteristic information indicating a past operating status of the device are adapted to store the characteristic information by a day of week and a time of day.

7. A power control method for an information processing apparatus having a device, the method comprising steps of:
storing characteristic information indicating a past operating status of the device; and
controlling a power management of the device based on the characteristic information;
wherein said controlling step comprises the substeps:
detecting (S107) a present operating status of the device and predicting (S108) a future operating status of the device based on the detected present operating status and the characteristic information; and
controlling (S109) the power management of the device based on the predicted operating status of the device by controlling on/off of a power supply of the device.

8. The method according to claim 7, further comprising steps of:
periodically detecting a present operating status of the device; and analyzing the detected present operating status of the device and obtaining the characteristic information.

9. The method according to claim 7, wherein the controlling step comprises a substep of controlling an operating speed of the device.

10. The method according to claim 7, further comprising steps of:
generating a wakeup signal for changing the information processing apparatus to a power-on state from a sleep state at a predetermined time, wherein the controlling comprises:
predicting, based on the characteristic information, a time at which a power of the information processing apparatus is turned on; and
determining the predetermined time based on the predicted time.

11. The method according to claim 7, wherein the controlling step comprises a substep of:
predicting a time at which the information processing apparatus is changed to a sleep state from an operative state based on the characteristic information; and
setting the information processing apparatus to the sleep state from the operative state at the predicted time.

## Patentansprüche

1. Informationsverarbeitungsvorrichtung mit einer Einrichtung, umfassend:
ein Speichermittel (204) zum Speichern von charakteristischer Information, die einen vergangenen Betriebszustand der Einrichtung angibt; und
ein Mittel (201) zum Steuern eines Leistungsmanagements der Einrichtung basierend auf der charakteristischen Information;
wobei das Steuermittel (201) umfasst:
ein Mittel (112) zum Erfassen eines aktuellen Betriebszustandes der Einrichtung und Vorhersagen eines zukünftigen Betriebszustands der Einrichtung basierend auf dem erfassten aktuellen Betriebszustand und der charakteristischen Information;
ein Leistungssteuerungsmittel (112) zum Steuern des Leistungsmanagements der Einrichtung basierend auf dem vorhergesagten zukünftigen Betriebszustand der Einrichtung; wobei
das Leistungssteuerungsmittel (112) das An/Aus einer Leistungsversorgung der Einrichtung steuert.

2. Vorrichtung gemäß Anspruch 1, ferner umfassend:
ein Mittel (201) zum periodischen Erfassen eines Betriebszustands der Einrichtung; und
Mittel (202, 203) zum Analysieren des erfassten Betriebszustands der Einrichtung und Erhalten der charakteristischen Information.

3. Vorrichtung gemäß Anspruch 1, bei der das Leistungssteuerungsmittel (112) eine Betriebsgeschwindigkeit der Einrichtung steuert.

4. Vorrichtung gemäß Anspruch 1, ferner umfassend:
ein Mittel (112B) zum Erzeugen eines Aufwachsignals zum Ändern der Informationsverarbeitungsvorrichtung in einen Einschaltzustand von einem Schlafzustand zu einer vorbestimmten Zeit;
und wobei das Steuerungsmittel (201) umfasst:
Mittel (202, 203, 204) zum Vorhersagen basierend auf der charakteristischen Information einer Zeit, zu der eine Leistung der Informationsverarbeitungsvorrichtung angeschaltet werden wird; und
Mittel (202, 203, 204) zum Bestimmen der vorbestimmten Zeit basierend auf der vorhergesagten Zeit.

5. Vorrichtung gemäß Anspruch 1, bei der das Steuerungsmittel (201) umfasst:
Mittel (202, 203, 204) zum Vorhersagen basierend auf der charakteristischen Information einer Zeit, zu der die Informationsverarbeitungsvorrichtung in einen Schlafzustand von einem Betriebszustand geändert werden wird; und
Mittel (202, 203, 204) zum Ändern der Informationsverarbeitungsvorrichtung in den Schlafzustand von dem Betriebszustand zu der vorhergesagten Zeit.

6. Vorrichtung gemäß Anspruch 1, bei der:
die Mittel (204) zum Speichern charakteristischer Information, die einen vergangenen Betriebszustand der Vorrichtung angibt, angepasst sind, um die charakteristische Information nach Wochentag und Tageszeit zu speichern.

7. Leistungssteuerverfahren für eine Informationsverarbeitungsvorrichtung mit einer Einrichtung, wobei das Verfahren folgende Schritte umfasst:
Speichern charakteristischer Information, die einen vergangenen Betriebszustand der Einrichtung angibt; und
Steuern eines Leistungsmanagements der Einrichtung basierend auf der charakteristischen Information;
wobei der Steuerschritt die folgenden Subschritte umfasst:
Erfassen (S107) eines aktuellen Betriebszustands der Einrichtung und Vorhersagen (S108) eines zukünftigen Betriebszustands der Einrichtung basierend auf dem erfassten aktuellen Betriebszustand und der charakteristischen Information; und
Steuern (S109) des Leistungsmanagements der Einrichtung basierend auf dem vorhergesagten Betriebszustand der Einrichtung durch Steuern des An/Aus einer Leistungsversorgung der Einrichtung.

8. Verfahren gemäß Anspruch 7, ferner mit folgenden Schritten:
periodisches Erfassen eines aktuellen Betriebszustands der Einrichtung; und
Analysieren des erfassten aktuellen Betriebszustands der Einrichtung und Erhalten der charakteristischen Information.

9. Verfahren gemäß Anspruch 7, bei dem der Steuerschritt einen Subschritt zum Steuern einer Betriebsgeschwindigkeit der Einrichtung umfasst.

10. Verfahren gemäß Anspruch 7, ferner mit folgenden Schritten:
Erzeugen eines Aufwachsignals zum Ändern der Informationsverarbeitungsvorrichtung in einen Einschaltzustand von einem Schlafzustand zu einer vorbestimmten Zeit, wobei das Steuern umfasst:
Vorhersagen basierend auf der charakteristischen Information einer Zeit, zu der eine Leistung der Informationsverarbeitungsvorrichtung angeschaltet werden wird; und
Bestimmen der vorbestimmten Zeit basierend auf der vorhergesagten Zeit.

11. Verfahren gemäß Anspruch 7, bei dem der Steuerschritt folgenden Subschritt umfasst:
Vorhersagen einer Zeit, zu der die Informationsverarbeitungsvorrichtung in einen Schlafzustand von einem Betriebszustand basierend auf der charakteristischen Information geändert werden wird; und
Einstellen der Informationsverarbeitungsvorrichtung in den Schlafzustand von dem Betriebszustand zu der vorgesagten Zeit.

## Revendications

1. Appareil de traitement d'informations comprenant :
un moyen de mémorisation (204) destiné à mémoriser les informations caractéristiques indiquant un état de fonctionnement passé du dispositif, et
un moyen (201) destiné à commander une gestion d'alimentation du dispositif sur la base des informations caractéristiques,
dans lequel ledit moyen de contrôleur (201) comprend :
un moyen (121) destiné à détecter un état de fonctionnement présent du dispositif et à prédire un état de fonctionnement futur du dispositif sur la base de l'état de fonctionnement présent détecté et des informations caractéristiques,
un moyen de contrôleur d'alimentation (112) destiné à commander la gestion d'alimentation du dispositif sur la base de l'état de fonctionnement prédit du dispositif, où
le moyen de contrôleur d'alimentation (112) commande l'activation/la désactivation d'une fourniture d'alimentation du dispositif.

2. Appareil selon la revendication 1, comprenant en outre :
un moyen (201) destiné à détecter périodiquement un état de fonctionnement du dispositif, et
des moyens (202, 203) destinés à analyser l'état de fonctionnement détecté du dispositif et à obtenir des informations caractéristiques.

3. Appareil selon la revendication 1, dans lequel le moyen de contrôleur d'alimentation (112) commande une vitesse de fonctionnement du dispositif.

4. Appareil selon la revendication 1, comprenant en outre :
un moyen (112B) destiné à générer un signal de réveil destiné à faire passer l'appareil de traitement d'informations à un état sous-tension à partir d'un état de sommeil à un instant prédéterminé,
et dans lequel le moyen de commande (201) comprend :
des moyens (202, 203, 204) destinés à prédire, sur la base des informations caractéristiques, un instant auquel une alimentation de l'appareil de traitement d'informations est activée, et
des moyens (202, 203, 204) destinés à déterminer l'instant prédéterminé sur la base de l'instant prédit.

5. Appareil selon la revendication 1, dans lequel le moyen de commande (201) comprend :
des moyens (202, 203, 204) destinés à prédire, sur la base des informations caractéristiques, un instant auquel l'appareil de traitement d'informations est passé à un état de sommeil à partir d'un état opérationnel, et
des moyens (202, 203, 204) destinés à faire passer l'appareil de traitement d'informations à l'état de sommeil à partir de l'état opérationnel à l'instant prédit.

6. Appareil selon la revendication 1, dans lequel :
le moyen (204) destiné à mémoriser des informations caractéristiques indiquant un état de fonctionnement passé du dispositif est adapté pour mémoriser les informations caractéristiques par jour de la semaine et heure de la journée.

7. Procédé de commande d'alimentation pour un appareil de traitement d'informations comprenant un dispositif, le procédé comprenant les étapes consistant à :
mémoriser les informations caractéristiques indiquant un état de fonctionnement passé du dispositif, et
commander une gestion d'alimentation du dispositif sur la base des informations caractéristiques,
dans lequel ladite étape de commande comprend les sous-étapes consistant à :
détecter (S 107) un état de fonctionnement présent du dispositif et prédire (S 108) un état de fonctionnement futur du dispositif sur la base de l'état de fonctionnement présent détecté et des informations caractéristiques, et
commander (S 109) la gestion d'alimentation du dispositif sur la base de l'état de fonctionnement prédit du dispositif en commandant l'activation/la désactivation de la fourniture d'alimentation du dispositif.

8. Procédé selon la revendication 7, comprenant en outre les étapes consistant à :
détecter périodiquement un état de fonctionnement présent du dispositif, et analyser l'état de fonctionnement présent détecté de dispositif et obtenir les informations caractéristiques.

9. Procédé selon la revendication 7, dans lequel l'étape de commande comprend une sous-étape consistant à commander une vitesse de fonctionnement du dispositif.

10. Procédé selon la revendication 7, comprenant en outre les étapes consistant à :
générer un signal de réveil pour faire passer l'appareil de traitement d'informations à un état de mise sous-tension à partir d'un état de sommeil à un instant prédéterminé, où la commande comprend les étapes consistant à :
prédire, sur la base des informations caractéristiques, un instant auquel une alimentation de l'appareil de traitement d'informations est activée, et
déterminer l'instant prédéterminé sur la base de l'instant prédit.

11. Procédé selon la revendication 7, dans lequel l'étape de commande comprend les sous-étapes consistant à :
prédire un instant auquel l'appareil de traitement d'informations est passé à un état de sommeil à partir d'un état opérationnel sur la base des informations caractéristiques, et
placer l'appareil de traitement d'informations dans l'état de sommeil à partir de l'état opérationnel à l'instant prédit.
